# EUROPÄISCHE PATENTSCHRIFT

(11) **EP 4 248 156 B1**
(45) Veröffentlichungstag und Bekanntmachung des Hinweises auf die Patenterteilung: **27.08.2025**
(21) Anmeldenummer: 21815935.8
(22) Anmeldetag: 15.11.2021
(51) Int. Cl.: E04B 1/80, F25D 23/02, F25D 23/06

(54) **WÄRMEDÄMMELEMENT**
HEAT INSULATION ELEMENT
ÉLÉMENT D'ISOLATION THERMIQUE

(30) Priorität: 30.11.2020 DE 102020131618; 13.01.2021 DE 102021100454
(43) Veröffentlichungstag der Anmeldung: 27.09.2023
(73) Patentinhaber: Liebherr-Hausgeräte Ochsenhausen GmbH, 88416 Ochsenhausen (DE)
(72) Erfinder: HIEMEYER, Jochen, 97753 Karlstadt (DE); LIMBACH, Lukas, 97209 Veitshöchheim (DE); FREITAG, Michael, 97291 Thüngersheim (DE)
(74) Vertreter: Herrmann, Uwe
(86) Internationale Anmeldenummer: PCT/EP2021/081706
(87) Internationale Veröffentlichungsnummer: WO 2022/112041

(56) Entgegenhaltungen:
- EP-A1- 0 434 225
- WO-A1-2014/183622
- WO-A1-2020/158012
- JP-A- 2010 190 257
- JP-A- 2013 050 267
- US-A- 5 107 649

## Beschreibung

Die Erfindung betrifft ein Wärmedämmelement nach Anspruch 1 zum thermischen Isolieren. Solche Wärmedämmelemente finden insbesondere Verbreitung bei Kühlgeräten oder Thermoboxen, beispielsweise bei Kühl- und/oder Gefriergeräten. Bei diesen Geräten ist es von hoher Wichtigkeit, dass die Isolation von einem Innenbehälter zur Außenseite möglichst hochwertig ist, damit die zum Kühlen oder Erwärmen benötigte Energie auf einem möglichst niedrigen Niveau gehalten werden kann.

Wärmedämmende Elemente werden oft als Sandwichelemente aus einem Dämmstoff und außen angeordneten Deckschichten eingesetzt. Dies ist insbesondere von Dämmelementen auf Polyurethanschaumbasis bekannt, bei denen der Schaum die Dämmfunktion sowie die gute Verklebung mit den Deckschichten übernimmt und dadurch gleichzeitig auch eine hohe mechanische Stabilität ermöglicht.

Als Deckschichten kommen üblicherweise Stahl, Aluminium oder Kunststoffe zum Einsatz. Um Wärmebrücken zu vermeiden, ist es von Vorteil, wenn die Deckschicht zumindest im Randbereich des Sandwichelements aus Kunststoff besteht. Bei kosteneffizienten Strukturen, wie zum Beispiel Haushaltskältegeräten ist üblicherweise der gesamte Innenraum mit einer Kunststoffdeckschicht aufgebaut.

Problematisch hieran ist, dass der thermische Ausdehnungskoeffizient von Kunststoffen üblicherweise deutlich höher als der von Stahl ist. So liegt der Ausdehnungskoeffizient von Polystyrol bei ca. 7 *10 ⁻⁵ [1/K] und der für Stahl bei 1,2* 10⁻⁵ [1/K]. Bei der in Gefrierschränken vorliegenden Temperaturdifferenz von ca. 43 K ergibt sich für Polystyrol ein thermischer Schrumpf von 0,3%, d.h. bei einem großen Gerät mit 2 m Höhe würde der Innenbehälter in der Länge um 6 mm schrumpfen. Dieser Schrumpf wird durch das Gehäuse verhindert, wodurch sich jedoch Spannungen im Wärmedämmelement ergeben, die konstruktionstechnisch verhindert werden müssen.

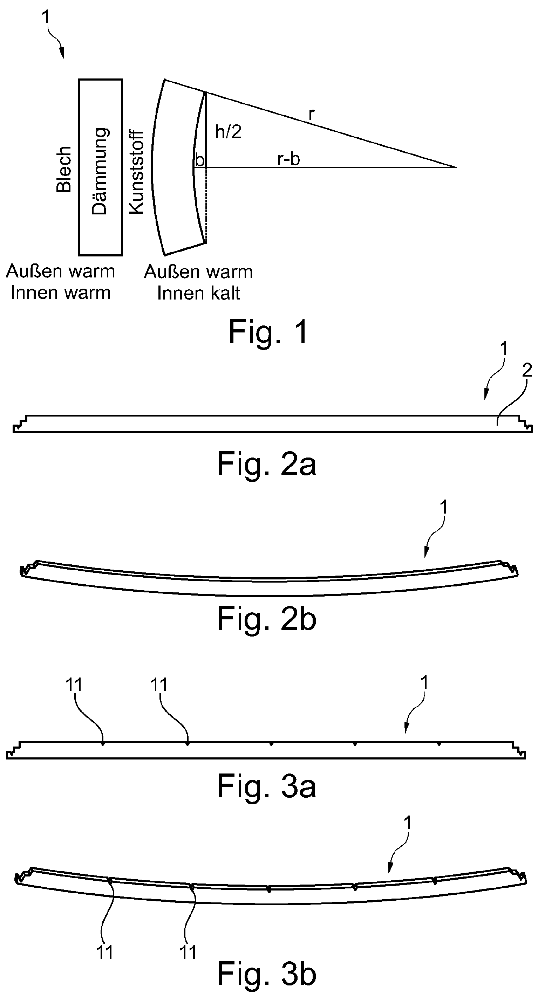

Bei flächigen Elementen wird diese Spannung zumindest zum Teil durch eine Durchbiegung der Elemente abgebaut. Bekannt ist dieses Phänomen insbesondere bei Türen von Haushaltskältegeräten. Würde man eine Gefrierschranktür mit 170 cm Höhe und 50 mm Dicke nur durch ein Wärmedämmelement in sandwichartiger Bauweise aufbauen, bei der eine Deckschichten auf einer Seite aus einem flachen Blech und die Deckschicht der anderen Seite aus einer flachen Kunststoffplatte besteht, so würde sich die Tür an der kalten Seite in der Mitte um ca. 22 mm durchbiegen. Dieser Vorgang ist in Fig. 1 illustriert.

In der Realität wird diese Durchbiegung durch die Steifigkeit des Türblechs reduziert. Diese Blechsteifigkeit lässt sich aber nicht beliebig steigern, da aus konstruktiven Gründen die Höhe der seitlichen Blechumkantung, (welche den Haupteinfluss für die Blechsteifigkeit darstellt, begrenzt ist und aus kostentechnischen Gründen die Blechstärke nicht beliebig erhöht werden kann. Darum ist aus dem Stand der Technik bekannt, zusätzlich mit Entlastungsnuten auf der Kunststoffseite zu arbeiten. Eine weitere aus dem Stand der Technik bekannte Möglichkeit die Türdurchbiegung zu reduzieren, besteht im Aufbringen von Blechstreifen auf der Kunststoffseite, welche bedingt durch die geringere thermische Ausdehnung den Schrumpf des Kunststoffes - und damit die Türdurchbiegung reduzieren. Nachteilhaft hieran ist aber der erhöhte fertigungstechnische Aufwand sowie der zusätzliche Materialeinsatz für die Blechstreifen.

Das Problemfeld ist für konventionelle Kältegerätetüren, welche als Dämmmaterial PU-Schaum aufweisen bekannt. Fig. 2 zeigt verschiedene Aspekte und Lösungsansätze des Problems aus dem Stand der Technik. PU-Schaum als Dämmmaterial ist allerdings hinsichtlich seiner Möglichkeiten hinsichtlich Dämmwirkung begrenzt und wird mehr und mehr durch Vakuumdämmung, bzw. folienumhüllte Vakuumdämmkörper ergänzt beziehungsweise ersetzt.

Vakuumdämmkörper mit einer Hochbarierrefolie als gasundurchlässige Hülle sind Stand der Technik und finden zunehmend Verbreitung bei der Umsetzung von Wärmedämmelementen. Der Einsatz einer Barrierefolie ermöglicht ausreichende Dichtigkeit gegenüber eindiffundierenden Gasteilchen ohne dabei eine zu große Wärmebrücke in der Hülle zu verursachen oder gegenüber thermischen oder mechanischen Verspannungen anfällig zu sein.

Die dünne Folie ist aber empfindlich gegenüber mechanischen Beschädigungen und muss im Einsatzfall geschützt werden. Außerdem kann der Vakuumdämmkörper in einem Sandwichverbund mechanische Kräfte sehr gut aufnehmen, da die Steifigkeit des druckbelasteten Dämmkörpers üblicherweise ähnlich groß oder größer ist als die Steifigkeit konventioneller Dämmstoffe, insbesondere von Kunststoffschäumen.

Das Dokument JP2013050267A offenbart alle technischen Merkmale aus dem Oberbegriff des Anspruchs 1.

Weitere Dokumente aus dem Stand der Technik sind WO2014/183622A1, US5107649A, WO2020/158012A1, EP0434225A1 und JP2010190257A.

Es ist das Ziel der vorliegenden Erfindung die oben thematisierte Problematik eine durch thermische Unterschiede hervorgerufene Durchbiegung eines Wärmedämmelements abzumildern oder zu überwinden. Dies gelingt mit einem Wärmedämmelement, das sämtliche Merkmale des Anspruchs 1 aufweist.

Die vorliegende Erfindung ist offenbart im unabhängigen Anspruch 1. Weitere Ausführungsbeispiele sind offenbart in den abhängigen Ansprüchen.

Erfindungsgemäß umfasst das Wärmedämmelement einen plattenartigen Grundkörper mit einer ersten flächigen Seite und einer zweiten flächigen Seite, und einen Vakuumdämmkörper, der zwischen der ersten flächigen Seite und der zweiten flächigen Seite angeordnet ist, wobei die erste flächige Seite und die zweite flächige Seite durch eine jeweilige Deckschicht ausgestaltet sind, und an mindestens einer der beiden flächigen Seiten die entsprechende Deckschicht mit dem Vakuumdämmkörper nur partiell verbunden, insbesondere verklebt oder verschmelzt, ist. Die Erfindung ist dadurch gekennzeichnet, dass die nur partiell verbundene Deckschicht in allen, mehreren oder der Mehrzahl der nicht mit dem Vakuumdämmkörper verbundenen Bereiche eine Entlastungsstruktur aufweist, die dazu ausgelegt ist, eine thermische Expansion oder eine thermische Kontraktion zu kompensieren.

Da die Deckschicht nun nicht vollflächig mit dem Vakuumdämmkörper verbunden bzw. verklebt ist, kann die Deckschicht in den nicht mit dem Vakuumdämmkörper verklebten Bereichen eine durch einen Temperaturunterschied an den beiden Deckschichten erzeugte Durchbiegung verhindern. Dies gelingt, indem die thermische Kontraktion oder die thermische Expansion durch ein Ausdehnen oder ein Zusammenziehen der Entlastungsstruktur, die nicht mit dem Vakuumdämmkörper verbunden bzw. verklebt ist, umgesetzt wird. So ist es möglich, dass die thermische Expansion bzw. die thermische Kontraktion einer Deckschicht über ein Verändern der Entlastungsstruktur abgebaut wird, ohne dass es zu einem nennenswerten Durchbiegen des Vakuumdämmkörpers oder des Wärmedämmelements kommt.

Der Vakuumdämmkörper kann dabei ein folienumhüllter Vakuumdämmkörper sein, der beispielsweise Perlit als Kernmaterial aufweist.

Vakuumdämmkörper mit Perlit als Kernmaterial zeigen in der Dämmschicht eine geringere thermische Ausdehnung (<1*10⁻⁵ [1/K]) als PU-Schaum (ca. 7*10⁻⁵ [1/K]). Der Vorteil der geringeren thermischen Ausdehnung stellt sich aber nicht nur bei Perlit als Füllmaterial dar, sondern gilt für sämtliche folienumhüllten Vakuumdämmkörper, da diese anders als schäumende Dämmkörper nicht selbstklebend mit der Deckschicht sind. Vorteilhaft kommt also hierbei auch noch hinzu, dass ein Sandwichaufbau bei Dämmelementen mit einem folienumhüllten Vakuumdämmkörper durch einen Herstellervorgang erzeugbar ist, bei dem sich problemlos partielle Verklebungen zwischen Deckschicht und Vakuumdämmkörper realisieren lassen.

Nach einer vorteilhaften Modifikation der vorliegenden Erfindung ist dabei vorgesehen, dass der folienumhüllte Vakuumdämmkörper sandwichartig zwischen einer ersten Deckschicht und einer zweiten Deckschicht aufgenommen ist, vorzugsweise wobei der folienumhüllte Vakuumdämmkörper mit beiden Deckschichten direkt in Verbindung steht.

Nach einer weiteren optionalen Modifikation der vorliegenden Erfindung kann vorgesehen sein, dass die Deckschicht Kunststoff, Stahl und/oder Aluminium umfasst oder aus einem dieser Materialen besteht.

Typischerweise ist ein Wärmedämmelement mit Deckschichten aufgebaut, die aus unterschiedlichen Materialien gefertigt sind. Eine Kühlschranktür ist aufgrund von Stabilitätsanforderungen und eines verbesserten optischen Eindrucks in der Regel außen mit einem Stahlblech versehen, wohingegen die Innenseite dieser Kühlschranktür aus Kunststoff ist. Daher ist bei einer solchen Türe das Wärmedämmelement mit einer inneren Deckschicht aus Kunststoff und einer äußeren Deckschicht aus einem Stahlblech aufgebaut.

Nach einer weiteren Fortbildung der vorliegenden Erfindung kann vorgesehen sein, dass die Deckschicht und der Vakuumdämmkörper über mehrere Verbindungsbereiche partiell miteinander verbunden sind, die voneinander beabstandet sind.

Zwischen den Verbindungsbereichen ist jeweils eine Entlastungsstruktur vorgesehen, die durch die nicht mit dem Vakuumdämmkörper verbundenen Deckschichtbereich gebildet ist. Indem nur Teile der Deckschicht mit dem Vakuumdämmkörper verbunden bzw. verklebt sind, können die nicht verbundenen Abschnitte der Deckschicht die thermische Expansion bzw. Kontraktion aufnehmen und umsetzen, sodass die zu einer Durchbiegung führenden Kräfte, welche von der Deckschicht auf den Vakuumdämmkörper einwirken, verringert werden.

Hierbei kann vorteilhafter Weise vorgesehen sein, dass der Abstand der Verbindungsbereiche kleiner als 100 mm, vorzugsweise kleiner als 75 mm und bevorzugterweise kleiner als 50 mm ist.

Das Vorsehen von mehreren Verbindungsbereichen, die weniger als 100 mm voneinander beabstandet sind, trägt zur Stabilität der Deckschicht bei und sorgt dafür, dass auch bei einer haptischen Überprüfung der so ausgebildeten Deckschicht kein negativer Eindruck entsteht.

Weiter kann nach der Erfindung vorgesehen sein, dass alle, mehrere oder die Mehrzahl der Verbindungsbereiche streifenartig an der Deckschicht ausgebildet sind und vorzugsweise parallel zueinander verlaufen.

Durch das streifenartige Ausbilden der Verbindungsbereiche entsteht eine zuverlässige Verbindung zwischen Deckschicht und Vakuumdämmkörper, die einfach industriell umsetzbar ist. Sind die Verbindungsbereiche darüber hinaus auch noch parallel zueinander ausgerichtet, stellt dies eine weitere Erleichterung bei der Herstellung des erfindungsgemäßen Wärmedämmelements dar, da mehrere parallele Verbindungstreifen in einem einzigen maschinellen oder händisch ausgeführten Arbeitsschritt erstellt bzw. aufgetragen werden können. Zudem ergibt sich durch die parallele Ausrichtung der Verbindungstreifen sowie der hieraus ebenfalls parallelen Anordnung der zwischen den Verbindungstreifen angeordneten Entlastungsstruktur eine vorteilhafte optische Ausgestaltung der Deckschicht.

Nach einer weiteren vorteilhaften Variante der vorliegenden Erfindung kann vorgesehen sein, dass die Verbindungsbereiche in einer regelmäßigen Struktur zwischen der Deckschicht und dem Vakuumdämmkörper angeordnet sind, wobei vorzugsweise ein Abstand zwischen den zwischen Deckschicht und dem Vakuumdämmkörper vorgesehenen Verbindungsbereichen gleich ist.

Das regelmäßige Anordnen der Verbindungsbereiche zwischen Deckschicht und Vakuumdämmkörper sorgt für eine über die gesamte Fläche der Deckschicht gleichbleibende Stabilität und einen besonders vorteilhaften optischen Eindruck.

Vorzugsweise ist nach der Erfindung vorgesehen, dass die Entlastungsstruktur konvex gegenüber dem Vakuumdämmkörper ausgeformt ist, und vorzugsweise in Schnittansicht glocken- oder haubenförmig ausgestaltet ist.

Durch die gegenüber dem Vakuumdämmkörper konvexe Ausgestaltung der Entlastungsstruktur ist diese dazu in der Lage, eine thermische Expansion bzw. eine thermische Kontraktion zu kompensieren, ohne dabei übermäßig viel Kraft in den mit der Deckschicht verbundenen Vakuumdämmkörper einzuleiten. Dies geschieht, indem die konvexe Entlastungsstruktur sich gegenüber der im Wesentlichen eben ausgebildeten Oberfläche des Vakuumdämmkörpers abhebt oder senkt, also expandiert oder kontrahiert.

Hierbei kann ferner vorgesehen sein, dass der maximale Abstand von einer Innenseite der sich von dem Vakuumdämmkörper abhebenden Entlastungsstruktur kleiner als das Fünffache, vorzugsweise kleiner als das Dreifache einer Dicke der Deckschicht ist. Dabei kann vorgesehen sein, dass dieser Abstand von dem Vakuumdämmkörper zu der Innenseite der Deckschicht bei mindestens einer Dicke der Deckschicht liegt.

Nach einer weiteren, vorteilhaften Ausgestaltung der vorliegenden Erfindung kann vorgesehen sein, dass zwischen der Entlastungsstruktur und dem Vakuumdämmkörper ein Spalt, insbesondere ein Luftspalt, vorgesehen ist.

Dieser Spalt, der ein Ein- und ein Austreten eines Fluid bei einer thermischen Expansion bzw. einer thermischen Kontraktion zulässt, ermöglicht die Bewegung der Deckschicht bzw. der Entlastungsstruktur zu dem Vakuumdämmkörper hin bzw. von diesem Weg.

Ferner kann nach der vorliegenden Erfindung vorgesehen sein, dass ein Flächenanteil von nicht verbundenen Bereichen zwischen Deckschicht und dem Vakuumdämmkörper größer als der Flächenanteil von verbundenen Bereichen zwischen Deckschicht und Vakuumdämmkörper, vorzugsweise größer als das Doppelte der verbundenen Bereiche ist.

Die vorliegende Erfindung umfasst ferner eine Tür eines Kühl- und/oder Gefriergeräts, wobei die Tür oder die Klappe ein Wärmedämmelement nach einer der vorhergehend diskutierten Varianten umfasst oder aus einem solchen Wärmedämmelement besteht.

Hierbei kann vorgesehen sein, dass die Verbindungsbereiche streifenartig quer zur Längsrichtung der Tür verlaufen und sich vorzugsweise über die gesamte Breite der Tür erstrecken. Hierdurch wird insbesondere die als problematisch angesehene Durchbiegung einer Türe in Längsrichtung verhindert, da die thermische Kontraktion, die bspw. auf der zur Innenseite eines Kühlschranks auftretenden Deckschicht auftritt, durch die mindestens eine Entlastungsstruktur aufgenommen wird.

Nach einer weiteren optionalen Fortbildung kann hierbei vorgesehen sein, dass an einer zum Inneren des Kühl- und/oder Gefriergeräts gewandten Seite der Tür die Entlastungsstrukturen des Wärmedämmelements vorgesehen sind. Diese können dort die Oberfläche der Tür darstellen.

Vorzugsweise kann ebenfalls vorgesehen sein, dass an einer Außenseite der Türe, die zu einem Äußeren des Kühl- und/oder Gefriergeräts gewandt ist, eine nicht mit Entlastungsstrukturen versehene Deckschicht des Wärmedämmelements, die vorzugsweise aus Aluminium oder einem Stahl gefertigt ist, angeordnet ist.

Das Vorsehen einer Außenkontur einer Türe, die aus Stahlblech oder einem Aluminium gefertigt ist, sorgt für einen hochwertigen optischen Eindruck und trägt zudem dazu bei, dass die Außenseite unempfindlich gegen Stöße oder andere Umwelteinwirkungen ist.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Vorteile, Merkmale und Einzelheiten der Erfindung werden anhand der Figurenbeschreibung ersichtlich. Dabei zeigen:
- Fig. 1:: eine Illustration zur Veranschaulichung einer Durchbiegung eines Wärmedämmelements mit zwei Deckschichten und einer dazwischen angeordneten Dämmung,
- Fig. 2a-b:: eine Seitendarstellung eines Wärmedämmelements nach dem Stand der Technik in einem entspannten und einen aufgrund thermischer Kontraktion hervorgerufenen durchgebogenen Zustand,
- Fig. 3a-b:: eine Seitendarstellung eines weiteren Wärmedämmelements nach dem Stand der Technik in einem entspannten und einen aufgrund thermischer Kontraktion hervorgerufenen durchgebogenen Zustand,
- Fig.4:: eine Schnittansicht eines erfindungsgemäßen Wärmedämmelements in einem befestigten Zustand an einem Kühl- und/oder Gefriergerät und
- Fig.5:: ein vergrößerter Ausschnitt des Vakuumdämmkörpers in einer Schnittansicht.

Fig. 1 zeigt einen sandwichartig aufgebauten Dämmkörper (1) nach dem Stand der Technik, dessen äußere Deckschichten Blech bzw. Kunststoff sind. Dabei ist in der Figur die äußere Seite links angeordnet, sodass die Deckschicht aus Blech außen und die Deckschicht aus Kunststoff innen angeordnet ist. Wird ein solcher Dämmkörper nun an einer Innenseite heruntergekühlt, wohingegen die Außenseite auf einem konstanten Temperaturniveau verbleibt, kommt es zu der dargestellten Durchbiegung.

Fig. 2a und Fig. 2b zeigen eine Seitenansicht eines herkömmlichen Dämmkörpers, wobei die in der Darstellung oben angeordnete Innenseite einmal demselben Temperaturniveau ausgesetzt ist wie die in der Darstellung unten angeordnete Außenseite und in einem anderen Fall einem deutlich geringeren Temperaturniveau ausgesetzt ist, sodass es zu einer Durchbiegung (wie in Fig. 2b) kommt.

Aus dem Stand der Technik war es bereits bekannt, quer zur Längsrichtung eines Elements verlaufenden Nuten 11 vorzusehen, um die Durchbiegung abzumildern. In den Figuren 3a und 3b ist ein solches Wärmedämmelement 1 mit quer verlaufenden Nuten 11 dargestellt, anhand dessen man erkennen kann, dass die Durchbiegung geringer ausfällt als jene in Fig. 2b. Die Nuten 11 sorgen dabei für eine erhöhte Stabilität an der zur Innenseite gewandten Deckschicht eines Wärmedämmelements 1, sodass eine thermische Kontraktion sich weniger stark auswirkt.

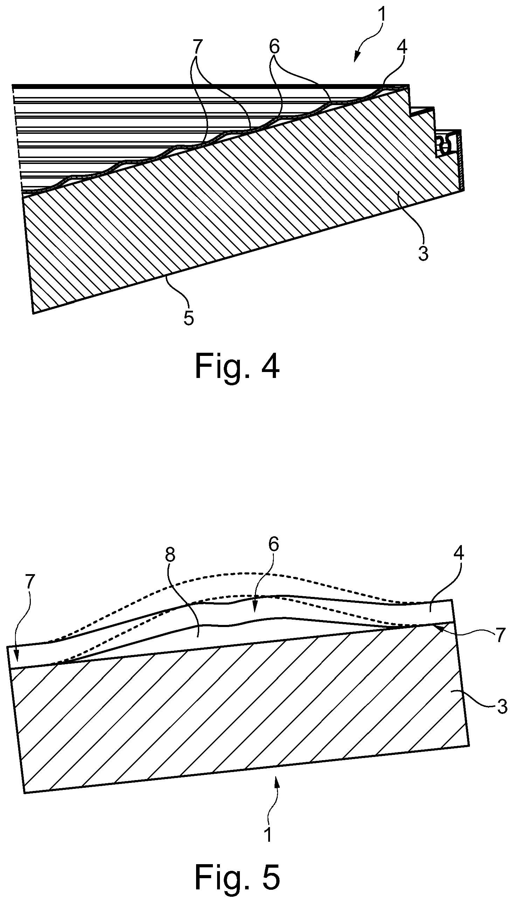

Fig. 4 zeigt eine Schnittansicht eines erfindungsgemäßen Wärmedämmelements 1. Man erkennt einen zwischen den beiden Deckschichten 4, 5 angeordneten Wärmedämmkörper 3, der ein folienumhüllter Vakuumdämmkörper 3 sein kann. Vorzugsweise kann hierbei auch vorgesehen sein, dass als Kernmaterial Perlit genutzt wird, da sich dieses zur Bildung von folienumhüllten Vakuumdämmkörpern als besonders vorteilhaft herausgestellt hat.

Die Deckschicht 4 ist dabei typischerweise einem kühleren Raum zugewandt als die Deckschicht 5. Man erkennt, dass die Deckschicht 4 nicht vollflächig mit dem Vakuumdämmkörper 3 verbunden bzw. verklebt ist, sondern regelmäßig durch nicht verbundene Bereiche gekennzeichnet ist. Diese Bereiche stellen Entlastungsstrukturen 6 dar, die dazu ausgelegt sind, eine thermische Expansion oder eine thermische Kontraktion aufzunehmen. Die Verbindungsbereiche 7, in denen die Deckschicht 4 mit dem Vakuumdämmkörper 3 verbunden bzw. verklebt ist, erstrecken sich dabei streifenartig und äquidistant über die flächige Seite des Vakuumdämmkörpers 3.

Ausgehend von einem Verbindungsbereich 7 ist die Entlastungsstruktur 6 in einer Schnittansicht eine aus zwei Schenkeln bestehende Konstruktion, wobei jeder der Schenkel in etwa gleich lang ist und diese zusammen einen stumpfen Winkel einschließen.

Durch die Regelmäßigkeit der Verbindungsbereiche 7 bzw. der dazwischen angeordneten Entlastungsstrukturen 6 entsteht ein vorteilhafter optischer Eindruck der Deckschicht 4.

Fig. 5 zeigt einen vergrößerten Ausschnitt des Wärmedämmelements (1) gemäß Anspruch 1 mit einem Vakuumdämmkörper (3) in einer Schnittansicht, sodass man den Bereich zwischen zwei benachbarten Verbindungsbereichen 7 sowie der dazwischen angeordneten Entlastungsstruktur 6 erkennen kann. Mit durchgehenden Linien ist dabei die Entlastungsstruktur 6 in einem thermisch kontrahierten Zustand dargestellt, wohingegen mit gepunkteter Linie ein dazu entspannter Zustand der Entlastungsstruktur 6 bzw. der entsprechenden Deckschicht 4 dargestellt ist. Man erkennt, dass in einem heruntergekühlten Zustand der Deckschicht 4 die Entlastungsstruktur 6 zusammengezogen ist, was sich in einer Verringerung des Abstands von der Innenseite der Entlastungsstruktur 6 zum Vakuumdämmkörper 3 zeigt. Durch die thermische Kontraktion wird die hauben- oder glockenförmige Kontur der Entlastungsstruktur 6 näher an die zugewandte Oberfläche des Vakuumdämmkörpers 3 herangezogen.

Vorteilhaft hieran ist, dass die Längenveränderung, welche durch eine Temperaturveränderung hervorgerufen worden ist, und auf der anderen Seite des Vakuumdämmkörpers 3 nicht auftritt, kompensiert werden kann, ohne dass es zu einer Durchbiegung des Vakuumdämmkörpers 3 kommt. Das nicht vollflächige Verbinden bzw. das nicht vollflächige Verkleben der Deckschicht 4 erlaubt eine thermische Kontraktion in der Entlastungsstruktur 6, sodass die hierbei normalerweise induzierten Kräfte in den Vakuumdämmkörper 3 nicht auftreten.

## Patentansprüche

1. Wärmedämmelement (1), umfassend:
einen plattenartigen Grundkörper (2) mit einer ersten flächigen Seite und einer zweiten flächigen Seite, und
einen Vakuumdämmkörper (3), insbesondere ein folienumhüllter Vakuumdämmkörper, der zwischen der ersten flächigen Seite und der zweiten flächigen Seite angeordnet ist, wobei
die erste flächige Seite und die zweite flächige Seite durch eine jeweilige Deckschicht (4, 5) ausgestaltet sind, und
an mindestens einer der beiden flächigen Seiten die entsprechende Deckschicht (4) mit dem Vakuumdämmkörper (3) nur partiell verbunden, insbesondere verklebt oder verschmelzt, ist,
**dadurch gekennzeichnet, dass**
die nur partiell verbundene Deckschicht (4) in allen, mehreren oder der Mehrzahl der nicht mit dem Vakuumdämmkörper (3) verbundenen Bereiche eine Entlastungsstruktur (6) aufweist, die dazu ausgelegt ist, eine thermische Expansion oder eine thermische Kontraktion zu kompensieren.

2. Wärmedämmelement (1) nach dem vorhergehenden Anspruch 1, wobei der Vakuumdämmkörper (3) sandwichartig zwischen einer ersten Deckschicht (4) und einer zweiten Deckschicht (5) aufgenommen ist, vorzugsweise wobei der Vakuumdämmkörper (3) mit beiden Deckschichten (4, 5) direkt in Verbindung steht.

3. Wärmedämmelement (1) nach einem der vorhergehenden Ansprüche, wobei die Deckschicht (4) Kunststoff, Stahl und/oder Aluminium umfasst oder aus einem dieser Materialen oder einer Kombination dieser besteht.

4. Wärmedämmelement (1) nach einem der vorhergehenden Ansprüche, wobei die Deckschicht (4) und der Vakuumdämmkörper (3) über mehrere Verbindungsbereiche (7) partiell miteinander verbunden sind, die voneinander beabstandet sind.

5. Wärmedämmelement (1) nach dem vorhergehenden Anspruch 4, wobei der Abstand der Verbindungsbereiche (7) kleiner als 100 mm, vorzugsweise kleiner als 75 mm und bevorzugterweise kleiner als 50 mm ist.

6. Wärmedämmelement (1) nach einem der vorhergehenden Ansprüche 4 oder 5, wobei alle, mehrere oder die Mehrzahl der Verbindungsbereiche (7) streifenartig an der Deckschicht (4) ausgebildet sind und vorzugsweise parallel zueinander verlaufen.

7. Wärmedämmelement (1) nach einem der vorhergehenden Ansprüche 4 - 6, wobei die Verbindungsbereiche (7) in einer regelmäßigen Struktur zwischen der Deckschicht (4) und dem Vakuumdämmkörper (3) angeordnet sind, wobei vorzugsweise der Abstand zwischen den vorgesehenen Verbindungsbereichen (7) gleich ist.

8. Wärmedämmelement (1) nach einem der vorhergehenden Ansprüche, wobei die Entlastungsstruktur (6) konvex gegenüber dem Vakuumdämmkörper (3) ausgeformt ist, und vorzugsweise in Schnittansicht glocken- oder haubenförmig ausgestaltet ist.

9. Wärmedämmelement (1) nach dem vorhergehenden Anspruch 8, wobei der maximale Abstand von einer Innenseite der sich von dem Vakuumdämmkörper (3) abhebenden Entlastungsstruktur (6) kleiner als das Fünffache, vorzugsweise kleiner als das Dreifache einer Dicke der Deckschicht (4) ist.

10. Wärmedämmelement (1) nach einem der vorhergehenden Ansprüche, wobei zwischen der Entlastungsstruktur (6) und dem Vakuumdämmkörper (3) ein Spalt (8), vorzugsweise ein Luftspalt vorgesehen ist.

11. Wärmedämmelement (1) nach einem der vorhergehenden Ansprüche, wobei ein Flächenanteil von den nicht verbundenen Bereichen zwischen der Deckschicht (4) und dem Vakuumdämmkörper (3) größer als der Flächenanteil von den verbundenen Bereichen zwischen der Deckschicht (4) und dem Vakuumdämmkörper (3) ist, vorzugsweise größer als das Doppelte der verbundenen Bereiche ist.

12. Tür eines Kühl- und/oder Gefriergeräts, wobei die Tür eine Klappe sein kann, und wobei die Tür ein Wärmedämmelement (1) nach einem der vorhergehenden Ansprüche umfasst oder aus einem solchen Element besteht.

13. Tür nach dem vorhergehenden Anspruch 12, wobei die Verbindungsbereiche (7) streifenartig quer zur Längsrichtung der Tür verlaufen und sich vorzugsweise über die gesamte Breite der Tür erstrecken.

14. Tür nach einem der vorhergehenden Ansprüche 12 - 13, wobei an einer zum Inneren des Kühl- und/oder Gefriergeräts gewandten Seite der Tür die Entlastungsstrukturen (6) des Wärmedämmelements (1) vorgesehen sind.

15. Tür nach einem der vorhergehenden Ansprüche 12 -14, wobei an einer Außenseite der Tür, die zu einem Äußeren des Kühl- und/oder Gefriergeräts gewandt ist, eine nicht mit Entlastungsstrukturen (6) versehene Deckschicht (5) des Wärmedämmelements (1), die vorzugsweise aus Aluminium oder einem Stahl gefertigt ist, angeordnet ist.

## Claims

1. Heat insulating element (1), comprising:
a plate-like base body (2) having a first planar side and a second planar side, and
a vacuum insulation body (3), in particular a film-covered vacuum insulation body, that is arranged between the first planar side and the second planar side, wherein
the first planar side and the second planar side are formed by a respective top layer (4, 5); and
the corresponding top layer (4) is only partially connected, in particular adhesively bonded or fused, to the vacuum insulation body (3) on at least one of the two planar sides,
**characterized in that**
the only partially connected top layer (4) comprises a relief structure (6) in all the regions, in a plurality of the regions, or the majority of the regions not connected to the vacuum insulation body (3) that is configured to compensate a thermal expansion or a thermal contraction.

2. Heat insulating element (1) in accordance with the preceding claim 1, wherein the vacuum insulation body (3) is received in a sandwich-like manner between a first top layer (4) and a second top layer (5), preferably wherein the vacuum insulation body (3) is directly connected to both top layers (4, 5).

3. Heat insulating element (1) in accordance with any one of the preceding claims, wherein the top layer (4) comprises plastic, steel, and/or aluminum or consists of one of these materials or of a combination thereof.

4. Heat insulating element (1) in accordance with any one of the preceding claims, wherein the top layer (4) and the vacuum insulation body (3) are partially connected to one another via a plurality of connection regions (7) that are spaced apart from one another.

5. Heat insulating element (1) in accordance with the preceding claim 4, wherein the spacing of the connection regions (7) is smaller than 100 mm, preferably smaller than 75 mm, and more preferably smaller than 50 mm.

6. Heat insulating element (1) in accordance with any one of the preceding claims 4 or 5, wherein all, a plurality of, or the majority of the connection regions (7) are formed in a strip-like manner at the top layer (4) and preferably extend in parallel with one another.

7. Heat insulating element (1) in accordance with any one of the preceding claims 4 - 6, wherein the connection regions (7) are arranged in a regular structure between the top layer (4) and the vacuum insulation body (3), wherein the spacing between the provided connection regions (7) preferably is the same.

8. Heat insulating element (1) in accordance with any one of the preceding claims, wherein the relief structure (6) is shaped as convex with respect to the vacuum insulation body (3) and is preferably designed as bell-shaped or hood-shaped in a sectional view.

9. Heat insulating element (1) in accordance with the preceding claim 8, wherein the maximum spacing from an inner side of the relief structure (6) rising from the vacuum insulation body (3) is smaller than five times, preferably smaller than three times, of a thickness of the top layer (4).

10. Heat insulating element (1) in accordance with any one of the preceding claims, wherein a gap (8), preferably an air gap, is provided between the relief structure (6) and the vacuum insulation body (3).

11. Heat insulating element (1) in accordance with any one of the preceding claims, wherein a surface ratio of the non-connected regions between the top layer (4) and the vacuum insulation body (3) is larger than the surface ratio of the connected regions between the top layer (4) and the vacuum insulation body (3), preferably larger than twice that of the connected regions.

12. Door of a refrigerator unit and/or a freezer unit, wherein the door can be a lid and wherein the door comprises a heat insulating element (1) in accordance with any one of the preceding claims or consists of such an element.

13. Door in accordance with the preceding claim 12, wherein the connection regions (7) extend in a strip-like manner transversely to the longitudinal direction of the door and preferably over the entire width of the door.

14. Door in accordance with any one of the preceding claims 12 - 13, wherein the relief structures (6) of the heat insulating element (1) are provided at a side of the door facing the interior of the refrigerator unit and/or freezer unit.

15. Door in accordance with any one of the preceding claims 12 - 14, wherein a top layer (5) of the heat insulating element (1) that is not provided with relief structures (6) and that is preferably produced from aluminum or a steel is arranged at an outer side of the door that faces an exterior of the refrigerator unit and/or freezer unit.

## Revendications

1. Élément isolant thermique (1), comprenant :
un corps de base (2) en forme de plaque avec un premier côté plat et un deuxième côté plat, et
un corps isolant sous vide (3), notamment un corps isolant sous vide enveloppé d'une feuille, qui est agencé entre le premier côté plat et le deuxième côté plat, le premier côté plat et le deuxième côté plat étant formés par une couche de recouvrement (4, 5) respective, et
sur au moins l'un des deux côtés plats, la couche de recouvrement (4) correspondante n'étant reliée que partiellement au corps isolant sous vide (3), notamment collée ou fusionnée,
**caractérisé en ce que**
la couche de recouvrement (4) reliée seulement partiellement présente dans toutes, plusieurs ou la majorité des zones non reliées au corps isolant sous vide (3) une structure de décharge (6) qui est conçue pour compenser une expansion thermique ou une contraction thermique.

2. Élément isolant thermique (1) selon la revendication 1 précédente, dans lequel le corps isolant sous vide (3) est reçu en sandwich entre une première couche de recouvrement (4) et une deuxième couche de recouvrement (5), de préférence dans lequel le corps isolant sous vide (3) est en liaison directe avec les deux couches de recouvrement (4, 5).

3. Élément isolant thermique (1) selon l'une quelconque des revendications précédentes, dans lequel la couche de recouvrement (4) comprend du plastique, de l'acier et/ou de l'aluminium ou est constituée de l'un de ces matériaux ou d'une combinaison de ceux-ci.

4. Élément isolant thermique (1) selon l'une quelconque des revendications précédentes, dans lequel la couche de recouvrement (4) et le corps isolant sous vide (3) sont partiellement reliés entre eux par l'intermédiaire de plusieurs zones de liaison (7) qui sont espacées les unes des autres.

5. Élément isolant thermique (1) selon la revendication 4 précédente, dans lequel l'espacement des zones de liaison (7) est inférieur à 100 mm, de préférence inférieur à 75 mm et de manière davantage préférée inférieur à 50 mm.

6. Élément isolant thermique (1) selon l'une quelconque des revendications 4 ou 5 précédentes, dans lequel toutes, plusieurs ou la majorité des zones de liaison (7) sont réalisées à la manière de bandes sur la couche de recouvrement (4) et s'étendent de préférence parallèlement les unes aux autres.

7. Élément isolant thermique (1) selon l'une quelconque des revendications 4 à 6 précédentes, dans lequel les zones de liaison (7) sont agencées selon une structure régulière entre la couche de recouvrement (4) et le corps isolant sous vide (3), l'espacement entre les zones de liaison (7) prévues étant de préférence égal.

8. Élément isolant thermique (1) selon l'une quelconque des revendications précédentes, dans lequel la structure de décharge (6) est convexe par rapport au corps isolant sous vide (3), et est de préférence en forme de cloche ou de capot en vue en coupe.

9. Élément isolant thermique (1) selon la revendication 8, dans lequel l'espacement maximal à partir d'un côté intérieur de la structure de décharge (6) qui se soulève du corps isolant sous vide (3) est inférieure à cinq fois, de préférence inférieure à trois fois, une épaisseur de la couche de recouvrement (4).

10. Élément isolant thermique (1) selon l'une quelconque des revendications précédentes, dans lequel un espace (8), de préférence un espace d'air, est prévu entre la structure de décharge (6) et le corps isolant sous vide (3).

11. Élément isolant thermique (1) selon l'une quelconque des revendications précédentes, dans lequel un pourcentage de surface des zones non reliées entre la couche de recouvrement (4) et le corps isolant sous vide (3) est supérieur au pourcentage de surface des zones reliées entre la couche de recouvrement (4) et le corps isolant sous vide (3), de préférence supérieur au double des zones reliées.

12. Porte d'un réfrigérateur et/ou d'un congélateur, la porte pouvant être un volet, et la porte comprenant un élément isolant thermique (1) selon l'une quelconque des revendications précédentes ou étant constituée d'un tel élément.

13. Porte selon la revendication 12 précédente, dans laquelle les zones de liaison (7) s'étendent transversalement à la direction longitudinale de la porte, à la manière de bandes, et s'étendent de préférence sur toute la largeur de la porte.

14. Porte selon l'une quelconque des revendications 12 à 13 précédentes, dans laquelle les structures de décharge (6) de l'élément isolant thermique (1) sont prévues sur un côté de la porte tourné vers l'intérieur du réfrigérateur et/ou du congélateur.

15. Porte selon l'une quelconque des revendications 12 à 14 précédentes, dans laquelle une couche de recouvrement (5) de l'élément isolant thermique (1), qui n'est pas pourvue de structures de décharge (6) et qui est de préférence fabriquée en aluminium ou en acier, est agencée sur un côté extérieur de la porte qui est tourné vers l'extérieur du réfrigérateur et/ou du congélateur.
